# EUROPEAN PATENT SPECIFICATION

(11) **EP 2 475 726 B1**
(45) Date of publication and mention of the grant of the patent: **25.02.2015**
(21) Application number: 10768791.5
(22) Date of filing: 13.09.2010
(51) Int. Cl.: C09D 11/00, D21C 5/02

(54) **METHOD OF DEINKING INKJET INK-CONTAINING SUSPENSIONS**
VERFAHREN ZUR TINTENENTFERNUNG AUS TINTENHALTIGEN TINTENSTRAHLSUSPENSIONEN
PROCÉDÉ DE DÉSENCRAGE DE SUSPENSIONS CONTENANT UNE ENCRE POUR JET D'ENCRE

(30) Priority: 11.09.2009 FI 20095940
(43) Date of publication of application: 18.07.2012
(73) Proprietor: UPM-Kymmene Corporation, 00130 Helsinki (FI)
(72) Inventor: KEMPPAINEN, Katariina, FI-02044 Vtt (FI); HAKALA, Terhi, FI-02044 Vtt (FI)
(74) Representative: Tampereen Patenttitoimisto Oy
(86) International application number: PCT/FI2010/050699
(87) International publication number: WO 2011/030003

(56) References cited:
- WO-A1-00/15899
- WO-A2-03/061550
- US-A1- 2001 047 852
- US-A1- 2003 178 162
- US-A1- 2006 102 299

## Description

### Field of the Invention

The invention relates to deinking inkjet ink-containing suspensions. In particular, the invention relates to deinking inkjet-printed paper, which is pulped for obtaining said suspension. In addition, the invention concerns a novel kind of use of laccase enzyme for ink decolorization.

### Background of the Invention

High speed inkjet printing technology provides the ability to print full color variable data in mass production. With the emergence of the new versatile inkjet printing technology it has been forecasted that within a few years inkjet printing will account for a significant portion of overall printing market and competing with other digital technologies for many end-use applications.

However, the question of recyclability of a new print product must be addressed before it can make it to the market because of demands for increasing the recycling rate of paper. Water-based inkjet inks have been determined non-deinkable and claimed to pose the biggest threat so far for the deinking industry by International Association of Deinking Industry (INGEDE). It has been reported that only 10% of inkjet-printed paper in the raw material can destroy the whole batch of recycled paper pulp leaving it unacceptably grey.

Of all known inks, aqueous inkjet inks may be the most difficult to deink. They are not deinked efficiently in the current deinking processes. This is mainly because hydrophilic pigments and soluble dyes do not agglomerate to suitable particle size for the dominant separation method, i.e. flotation, but dissolve or form too small pieces which remain in the liquid phase or adhere on the fiber surface causing deteriorated brightness. Washing improves the result but reduces yield and thus is not a preferred solution among deinkers. Reductive bleaching may decolorize some dyes effectively but not all types and furthermore bleaching is not always included in the deinking process. Near neutral pH has been found to improve aqueous ink deinking but proposed solutions often include additional flotation and washing steps requiring new machinery.

Enzymatic deinking has been studied since late 1980's for improving deinking result. Enzymatic approaches have been developed for example to be able to move towards more neutral pH instead of corrosive or otherwise harmful pH levels, and also to improve the removal of ineffectively deinked inks. For example, WO 2000/015899 discloses a method for decolorizing printed paper, utilizing two enzymatic steps, i.e., a dislodging step, where ink particles are dislodged from fibers of the paper, and a decolorization step for the dislodged particles. Cellulases and amylases are used for the dislodging step. After the decolorization step with laccase, the released ink is separated. The method has been reported to be suitable for decolorizing colored paper and for deinking ink including toner, not inkjet-printed paper or inkjet inks. Thus, it is suitable for photocopy and laser-jet-printed papers, white and colored ledger, newsprint and magazine papers. Deinking of such papers is difficult because they contain cross-linking agents which bind the ink strongly to the fiber and make the toner fragmentation difficult and because dyes used to color paper cause deteriorated brightness.

However, no enzymatic methods for decolorizing inkjet ink to improve the deinking of inkjet ink -containing paper have been suggested. Thus, there is a need for improved methods for this particular purpose.

### Summary of the Invention

It is an aim of the invention to provide a novel deinking method, which increases the recyclability of aqueous dye-based inkjet ink -containing paper material, pulps and process waters.

The aim of the invention is achieved by the method according to claim 1.

The invention is based on the idea of decolorizing inkjet ink by laccase treatment. The inventors have found that aqueous inkjet dyes, unlike other ink types, can be decolorized with laccase directly in the pulp to be deinked or circulation waters of the deinking process. Decolorization can be made without enzymatic preprocessing to dislodge ink from the fibers of the pulp.

In the method according to the invention, aqueous dye-based inkjet ink-containing suspension is decolorized by laccase treatment. The suspension can be any suspension present in a deinking process, in particular the paper pulp to be deinked or other process waters of paper deinking process. One example of such other process waters are the circulation waters of the deinking process, which typically contain a significant residues of inkjet ink.

Inkjet-printed paper can be deinked by the present method by
- providing raw material containing paper printed with aqueous dye-based inkjet ink,
- pulping the paper to obtain pulp containing inkjet ink from the inkjet-printed paper, and
- decolorizing the inkjet ink of the pulp by laccase treatment.

Decolorization of dyes in deinking process waters typically comprises
- providing raw material containing paper printed with aqueous dye-based inkjet ink,
- pulping the paper to obtain pulp containing inkjet ink from the inkjet-printed paper,
- obtaining a process water phase from deinking containing at least a portion of said inkjet ink, and
- decolorizing the inkjet ink in said water phase.

A particularly efficient process is achieved by decolorizing inkjet dyes in both the abovementioned stages of the deinking process, i.e. during pulping and circulation of process waters.

The invention also provides a novel use for the laccase enzyme for deinking of inkjet ink.

In particular, the laccase treatment can be carried out for paper pulps prior to any possible inkjet ink dislodging treatments with other enzymes and in the absence of other inkjet ink dislodging enzymes.

If the raw material contains also paper printed with other types of inks, which can be chemically dislodged during pulping and removed in flotation, the laccase treatment is preferably carried out simultaneously to dislodging the other inks with non-enzymatic chemicals, such as NaOH, H₂O₂, sodium silicate, or sodium oleate, or any combination thereof. However, the laccase treatment can be carried also after the flotation phase, for partially deinked pulp.

In particular, the laccase treatment may be carried out prior to any possible dislodging treatments with other enzymes and/or in the absence of other enzymes that may dislodge ink from the fibers. Such enzymes include, for example, cellulases and amylases.

In particular, laccases obtained from *Myceliophtora thermophila* (*M. thermophila*) or *Trametes versicolor* (*T. versicolor*) have shown to be effective in deinking aqueous inkjet inks.

The present novel use comprises the use of laccase for decolorizing aqueous dye-based inkjet ink of inkjet ink -containing pulp or process waters in a deinking process. In particular, laccase treatment can be applied without enzymatically dislodging the ink before or during decolorization. However, other chemical or mechanical dislodging treatments may be employed previously or simultaneously.

Considerable advantages are obtained by means of the invention. Enzymatic treatment of the pulp during deinking, i.e. while inkjet ink is dissolved in the pulp or adhered to the fibers, has proven to destroy the chromophores of the dye of the ink vehicles efficiently and without the need of further separation. As discussed above, separation of inkjet ink is not possible using conventional flotation methods. By means of the invention, the decolorized dye components can be recovered with the pulp. Consequently, the recyclability problem is solved.

According to experiments, aqueous dye-based high speed inkjet press inks can be decolorized with the present oxidizing enzymatic treatment by 40-98% depending on the ink, laccase and the treatment conditions. This is significantly more than what is achievable by the conventional deinking methods for inkjet-type inks. Moreover, a benefit of the invention is that decolorization can be carried out simultaneously to pulping and that a separate bleaching step, conventionally required for achieving an acceptable result, is not required.

Enzymatic treatment of pulped inkjet printed fine paper prior to flotation increases the brightness of the pulp by at least 5%.

Particular advantages are obtained in deinking uncoated paper grades, such as newspaper paper, for which the deinkability of inkjet ink is weak by conventional processes.

As the present laccase treatment decomposes the dyes efficiently as part of the decolorization process, there is no need to separate the ink vehicles from the pulp. Thus, the decolorized (and decomposed) dyes can be recovered with the pulp, at least in the magnitude that they pass through the flotation phase typically involved.

Mediator compounds have been found to further improve the decolorization result. In particular acetosyringone, ABTS (2,2'-azino-bis(3-ethylbenzthiazoline-6-sulphonic acid)) and violuric acid are known to work. However, the invention is not restricted to these but other mediator compounds well known in the art can be used. Suitable mediator molecules are listed e.g. in WO 2000/015899.

A remarkable problem behind the invention is that the emergence of new high speed printing technology, often utilizing inkjet techniques, is endangered if the printed products are labeled unrecyclable. The invention provides a way to solve the recyclability problem for products printed with aqueous dye-based inkjet inks. Thus, increasing amounts of inkjet printed material can be processed better and thus the emergence of the new high speed printing technology can be facilitated. Consequently, the invention can be benefited by the whole value chain of the inkjet printing industry from the paper and ink manufacturers to the deinker.

The present invention is preferably applied for raw material in which the amount of inkjet-printed paper is at least 0.1 %, preferably at least 1 %, in particular at least 5 %.

In this document, the terms "inkjet ink" or ink-jet -type ink" mean any dye-containing ink, which can be printed by inkjet technology. In particular, dye-based inkjet ink is free from toner and its base is water. Although pigmented aqueous inks may be deinked too by the present process, the invention has particular advantages in deinking dye-based inkjet inks. The term "other (type of) ink" refers to non-inkjet inks within the abovementioned meaning. Such inks comprise, for example, pigment- and toner-based inks and other colorants.

"Dye" means a substance having affinity with paper and soluble with the solvent used. Typical dye types to be deinked with the present method are direct dyes, in particular cationic direct dyes, and Azo dyes. However, other dye types, such as acid dyes, basic dyes, sulfur dyes, reactive dyes and disperse dyes can also be used within the invention.

"Inkjet-printed paper" means any paper onto or into which inkjet ink has been applied.

"Decolorization" refers to destroying or removing the chromophores in the dye structure so that the spectroscopically observed absorbance and visually perceived color of the substance decreases.

The term "laccase", unless otherwise specified, covers all substances within the EC class 1.10.3.2, capable of oxidizing organic, compounds , especially phenolics, through mediated or unmediated one-electron oxidation while reducing oxygen to water. Laccases can be of plant, microbial, insect or mammalian origin. In particular laccase can be fungal laccase that are active in alkaline pH.

The term "mediator", unless otherwise specified, covers all chemical compounds that can mediate the oxidizing reaction of laccase by shuttling electrons between the laccase and the dye and thus accelerate or enhance the oxidation of the dye..

Further embodiments and advantages of the invention are described with reference to the attached drawings.

### Brief Description of the Drawings

Fig. 1 shows a deinking trial procedure used in the Examples.
Fig. 2a shows the maximal obtained decolorization of Kodak FV3000 inks with 1 U/ml laccase.
Fig. 2b shows the maximal obtained decolorization of Kodak FV3000 inks with 1 U/ml laccase and 0.1 mM acetosyringone.

### Detailed Description of Embodiments

The invention discloses enzymatic decolorization method of dyes of dye-based inks during or prior to a deinking process. The deinking process as such and its many variations are known in the art and is not discussed in detail here. For example, Fricker, A. et al, Novel solutions to new problems in paper deinking, Pigment & Res. Tech. 36 (2007) 141-152*,* discloses one possible deinking process and deinking plant design.

The invention can be used for all dye-based aqueous inkjet inks. A non-comprehensive list of possible dyes includes (with color and structural type) Acid Blue 9 (cyan, triarylmethane), Acid Red 249 (magenta, not available), Acid Red 52 (magenta, xanthene), Acid Red 80 (magenta, anthrapyridone), Acid Red 82 (magenta, anthrapyridone), Acid Yellow 17 (yellow, monoazo), Direct Black 168 (black, azo), Direct Black 19 (black, tetrakisazo), Direct Blue 199 (cyan, copper phthalocyanine), Direct Blue 199 (cyan, copper phthalocyanine), Direct Blue 199 (cyan, copper phthalocyanine), Direct Blue 307 (cyan, copper phthalocyanine), Direct Blue 86 (cyan, copper phthalocyanine), Direct Yellow 86 (yellow, disazo), Food Black 2 (black, disazo), Reactive Black 31 (black polyazo metal complex), Reactive Red 23 (magenta, monoazo metal complex), Reactive Red 31 (magenta, azo naphtol) and Sulfur Black 2 (black, phenolic).

The invention can be used for deinking of most, if not all, commercially available aqueous dye-based inkjet inks designed both for small scale bubblejet printers and high-speed inkjet presses.

For deinking four-color inked pulps, two or more different laccases can be used for achieving the best deinking result. Of the laccases tested, *T. versicolor* laccase alone has been found to best decolorize magenta, black and cyan inks, while *M. thermophila* laccase has alone significant effect on magenta ink, at least when used on Kodak FV3000 ink series.

Laccase is preferably added to the pulp in the amount of 0.1 - 10 U per gram of dry paper pulp, depending on laccase type, ink type and process conditions. The treatment is carried out in the presence of oxygen.

The treatment preferably involves the use of mediator. Mediator has been found to increase the decolorization efficiency of especially *M. thermophila* laccase for all tested inks/colors, but also the deinking result of *T. versicolor* laccase is increased for some colors, in particular yellow, by the use of a mediator. Overall when used with a mediator *T. versicolor* laccase has been found to decolorize black and especially cyan inks better, while *M. thermophila* laccase decolorize magenta and yellow inks better. *T. versicolor* laccase was able to decolorize inks more effectively on average (63%) compared to M. thermophila laccase (50%).

The mediator is preferably selected from the group of: acetosyringone, methyl syringate, ABTS (2,2'-azino-bis(3-ethylbenzthiazoline-6-sulphonic acid), HBT (1-hydroxybenzotriazole), violuric acid, and TEMPO (2,2,6,6-tetramethyl piperidine). Other mediators well known in the art may be used too.

The amount of mediator may be, for example 0.005 - 0.05 % of dry paper pulp.

The laccase treatment may be carried out simultaneously to dislodging of other ink particles with non-enzymatic chemicals, such as NaOH, H₂O₂, sodium silicate, or sodium oleate, or any combination thereof. The pH of the pulp during pulping is typically at least 7, preferably between 8 and 9 depending on the alkaline tolerance of the enzyme. Such deinking chemicals and high pH are used in particular when deinking paper pulps containing various types of inks or toners, for example conventional press inks or photocopy or laser-jet toners.

In a conventional deinking process ink is separated typically in a flotation process. However, inkjet ink cannot be effectively separated by flotation, but remain in the pulp. Laccase treatment decolorizes inkjet inks and thus they do not need to be removed from pulp. Flotation may still be needed if the raw material contains other types of printed inks. Flotation has also been found to improve the brightness of 100 % inkjet-printed papers to a certain extent.

In the end of the process involving both enzymatic treatment and flotation, the brightness of the pulp has increased at least by 10 %, typically 15 - 30 %.

The invention can be utilized for typical paper waste containing a significant portion of inkjet-printed paper. As concerns conventional deinking process, even small amounts of inkjet ink can weaken the quality of the deinked pulp. For the present process, the amount of inkjet-printed paper in the pulp can be, for example 0.5 weight-% or more, preferably 1 weight-% or more, in particular 5 weight-% or more. There are no obstacles for using the invention for paper pulps being printed solely with inkjet inks, whereby the flotation phase would be completely avoidable, although such pulps are rarely commercially available.

The laccase treatment has been found to be particularly effective for inks containing Azo dyes, in particular Azo dyes with electron-donating groups in *ortho* position.

The method is particularly effective for paper pulps having a low content of lignin, such as wood-free paper pulps. This is because laccase oxidizes not only inkjet dyes, but also lignin, if present. However, this does not prevent the deinking of conventional wood-based paper pulps, provided that the amount and type of laccase and optionally the mediator is optimized and the process conditions are suitable.

According to a preferred embodiment, the pulp consistency during laccase treatment is 0.5 - 20 %, in particular 3 - 8 %, preferably about 5 %. The pulping stage in deinking is usually carried out in high (<20%) or medium (<12%) consistency, but the enzyme can be applied also later in the process when, for example after flotation when the consistency is lower.

Within this invention the treatment is preferably carried out at a temperature of 20 - 80 °C, in particular 40 - 80 °C, for example about 45 °C. The choice of temperature depends on the original process temperature and the optimum temperature for the laccase product. It is generally advantageous to choose a laccase which has a high temperature optimum, e.g. in one of the abovementioned ranges.

The laccase treatment is carried out for at least 10 minutes, preferably at least 50 minutes. The process can be enhanced by moderate mixing.

As shortly explained above, laccase treatment can be applied not only to the pulp itself, but also for process waters of deinking processes. The process waters can be drawn from any part of the process, being for example circulation waters or effluents from the deinking process. The benefit of the treatment is that the accumulation of the inkjet ink in the circulation waters can be prevented by decolorizing the dyes contained in the water. Also the color and toxicity of the effluents leaving the plant can be reduced with the treatment, which decreases the environmental load of the deinking process.

### Examples

Decolorization of four inkjet inks was tested with two laccase products both with and without the mediator compound acetosyringone. Aqueous dye-based inks used in the tests were cyan, magenta, yellow and black inks from the Kodak FV3000 ink series (USA). All four inks were observed to be susceptible for laccase decolorization with acetosyringone and all except yellow ink also without acetosyringone.

Two laccase products were used in the experiments: a liquid enzyme formulate Novozym 51003, from Novozymes, Denmark, and a solid enzyme formulate from Sigma-Aldrich, Germany. The source organisms of the laccases were *M. thermophila* and *T. versicolor,* respectively.

The effect of mediator choice, pH, and inhibition by deinking chemicals was tested only with *M. thermophila* laccase due to its alkaline-tolerant nature, which is more suitable to deinking conditions.

Two papers were used in the deinking experiments: a coated fine paper intended for inkjet printing from Kanzan Spezialpapiere GmbH, Germany, and a newspaper from UPM-Kymmene, Finland. Test image was printed on both papers with Kodak Versamark VX5000 inkjet press. For some trials only the strip containing one ink was used. The amount of ink per gram of paper was adjusted for some tests by mixing printed paper with unprinted paper.

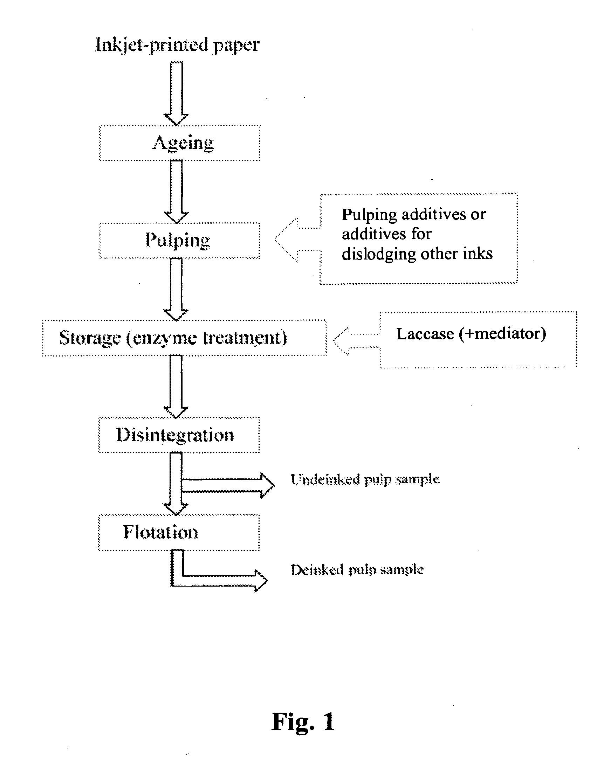

Fig. 1 shows the deinking trial procedure, which was a modified INGEDE deinkability test. The essential parts of the test were
1. Repulping of printed paper with sodium hydroxide, 1.8% sodium silicate, 0.8% collector chemical, 0.7% hydrogen peroxide and 18°dH water at 45°C and 15% consistency.
2. Enzyme treatment for an hour at 45°C and 5% consistency.
3. Flotation at 0.8% consistency, 7.51 volume, 6 l/min air flow and 1600 rpm mixing.

pH was adjusted lower for the enzyme treatment by reducing the amount of NaOH and consequently collector chemical oleic acid needed to be changed to its corresponding soap sodium oleate to ensure full saponification. A control sample was prepared to eliminate the effect of lower pH. The NaOH and oleic acid concentration in the reference sample corresponded to those in the original INGEDE test.

For sampling, a cellulose nitrate filter membrane with 0.45 µm pore size was from Sartorius, Germany, and filter paper for making filter pads from Macherey-Nagel (Germany). Equipment used in deinking were N50 pulper (Hobart, Germany) with a self-made heating jacket, disintegrator (Lorentzen & Wettre, Sweden), and a flotation cell 50990 (Outokumpu, Finland).

The deinking trial parameters are shown in Table 1.

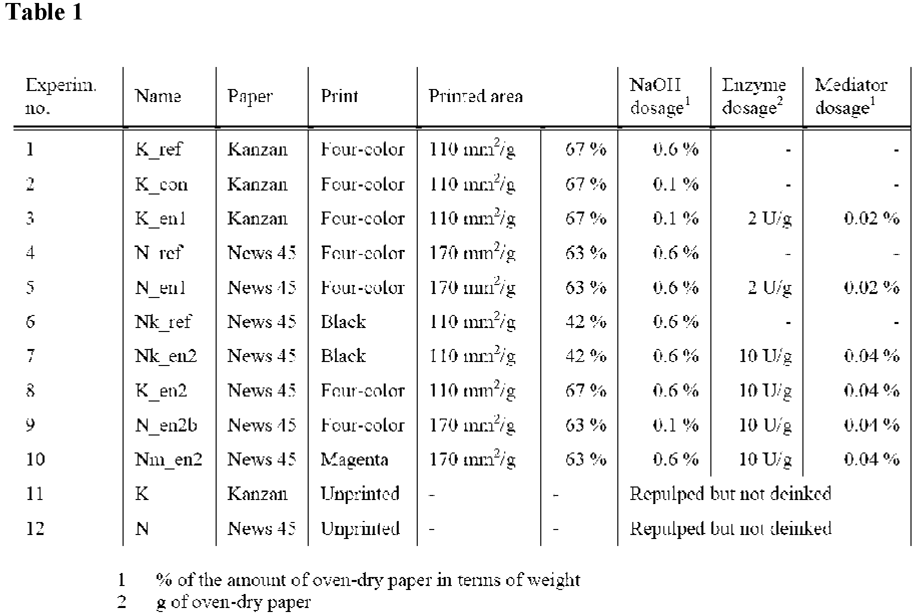

According to the experiments, aqueous dye-based high speed inkjet press inks can be decolorized with an oxidizing enzymatic treatment by 40-98% depending on the ink, laccase and the treatment conditions (Table 2).

**Table 2. The maximal obtained decolorization of Kodak FV3000 inks with 1 U/ml laccase and with or without 0.1 mM acetosyringone.**

| **Ink** | **Decolorization, %** | **Enzyme** | **Mediator** | **pH** | **Buffer** |
|---|---|---|---|---|---|
| Black | 74 | Novozym 51003, Novozymes | Yes | 8.3 | 50 mM Tris-HCl |
| Cyan | 78 | Laccase from *Trametes versicolor,* Sigma-Aldrich | No | 5 | 50 mM citrate phosphate |
| Yellow | 40 | Novozym 51003, Novozymes | Yes | 6.5 | 50 mM citrate phosphate |
| Magenta | 98 | Novozym 51003, Novozymes | Yes | 8.3 | 50 mM Tris-HCl |

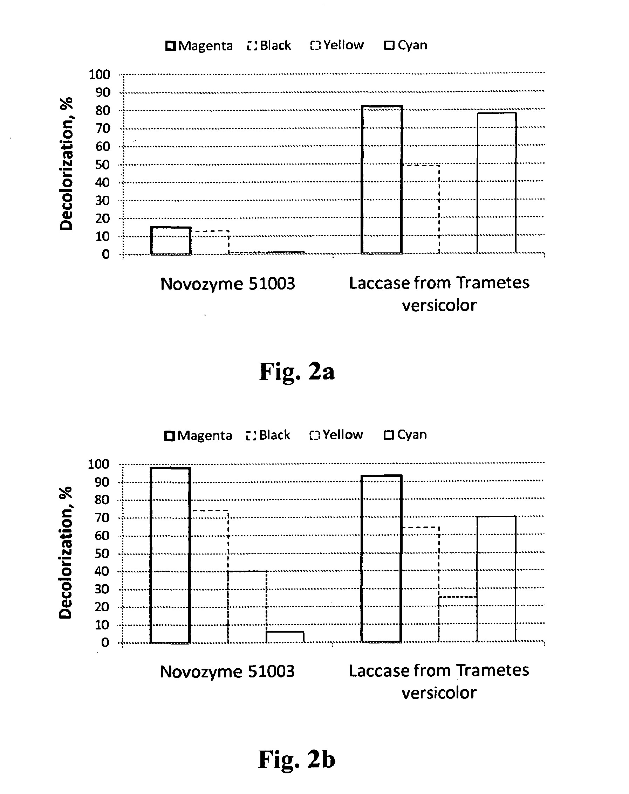

Laccase from *T. versicolor* has a higher redox potential and therefore it can alone decolorize inks better than laccase Novozym 51003 from Novozymes as seen in Fig. 2a. Mediator compound acetosyringone improves the decolorization efficiency more for *M. thermophila* (Novozymes) laccase than for the *T.versicolor* (Sigma) laccase (Fig. 2b).

Decolorization efficiency is not considerably inhibited by deinking chemicals sodium oleate and sodium silicate except for yellow ink 26-62% (data not shown). Hydrogen peroxide (500 ppm) decreases the decolorization of black and yellow ink 25% and 96%. The enzymatic treatment of pulped inkjet-printed fine paper with 2 U/g commercial Novozym 51003 laccase from Novozymes and 0.02% mediator acetosyringone increases the brightness of the pulp by 5% when compared to the control or reference samples (Table 3). Filter pad filtrate was filtrated through cellulose nitrate filters (0.45 µm) and neither the filter luminosity nor the absorbance of the filtrate showed changes. This indicates that a part of the ink is indeed decolorized and not just removed from the fiber surface to liquid phase. Strength properties of hand sheets made of the pulp do not change in the treatment.

**Table 3. Process conditions and ISO-brightness of filter pads from fine paper pulp printed with Kodak FV3000 inks.**

| Sample | Process conditions | | | ISO-Brightness, % | |
|---|---|---|---|---|---|
| | NaOH per fiber | Enzyme and mediator dosage per fiber | Collector chemical | Before flotation | After flotation |
| Reference | 0.6% | - | oleic acid | 69.8 | 80 |
| Control | 0.1% | - | sodium oleate | 71.8 | 80 |
| Enzyme | 0.1% | 2 U/g, 0.02% | sodium oleate | 73.2 | 84.1 |

## Claims

1. A method of deinking inkjet ink-containing suspensions, **characterized by**
- providing a suspension containing aqueous dye-based inkjet ink, and
- decolorizing said ink by laccase treatment.

2. The method according to claim 1, **characterized by** using as said suspension pulp obtained by
- providing paper raw material containing aqueous dye-based inkjet-printed paper,
- pulping the paper raw material to obtain pulp containing inkjet ink from the inkjet-printed paper and forming said suspension,
and wherein the inkjet ink of the pulp is decolorized by laccase treatment.

3. The method according to claim 2, **characterized in that** the laccase treatment is carried out prior to any possible inkjet ink dislodging treatments with other enzymes and in the absence of other inkjet ink dislodging enzymes.

4. The method according to claim 2 or 3, **characterized by** carrying out said laccase treatment simultaneously to dislodging of other ink particles with non-enzymatic chemicals, such as NaOH, H₂O₂, sodium silicate, or sodium oleate, or any combination thereof.

5. The method according to any of claims 2 - 4, **characterized in that** the amount of inkjet-printed paper in the pulp is at least 0.5 weight-%, preferably at least 1 weight-%, in particular at least 5 weight-%.

6. The method according to any of claims 2 - 5, **characterized in that** the said paper raw material comprises uncoated aqueous dye-based inkjet-printed paper.

7. The method according to any of claims 2 - 6, **characterized in that** the laccase treatment is carried out at pulp consistency of 3 - 8 %.

8. The method according to any of claims 2 - 7, **characterized in that** the amount of laccase is 0.1 -10 U per gram of dry paper pulp.

9. The method according to claim 1, **characterized by**
- providing raw material containing paper printed with aqueous dye-based inkjet ink,
- pulping the paper to obtain pulp containing inkjet ink from the inkjet-printed paper,
- subjecting the pulp to a deinking process,
- obtaining a process water phase from the deinking process, the water phase containing at least portion of said inkjet ink and forming said suspension, and
- decolorizing the inkjet ink in said water phase by laccase treatment.

10. The method according to any of the preceding claims, **characterized by** carrying out the laccase treatment in the presence of mediator, such as acetosyringone, ABTS or violuric acid.

11. The method according to any of the preceding claims, **characterized in that** the ink contains Azo dyes, in particular Azo dyes with electron-donating groups in *ortho* position.

12. The method according to any of the preceding claims, **characterized in that** the laccase is derived from *Myceliophtora thermophila* or *Trametes versicolor.*

13. The method according to any of the preceding claims, **characterized in that** the laccase treatment is carried out at a temperature of 20 - 60 °C.

14. The method according to any of the preceding claims, **characterized in that** the laccase treatment is carried out for at least 30 minutes, in particular at least 50 minutes, preferably with moderate mixing.

15. The method according to any of the preceding claims, **characterized in that** the decolorization is followed or preceded by a flotation phase.

16. Use of laccase for decolorizing aqueous dye-based inkjet ink of inkjet ink - containing suspension of a deinking process.

17. The use according to claim 16, **characterized in that** the suspension is pulp obtained by pulping inkjet ink-printed paper.

18. The use according to claim 17, **characterized in that** the decolorization with laccase is carried out without enzymatically dislodging the ink before decolorization.

19. The use according to claim 16, **characterized in that** the suspension comprises process water, such as circulation water or effluent, of a deinking process.

20. The use according to any of claims 16 - 19, **characterized in that** the decolorization with laccase is carried out in the absence of other enzymes.

## Patentansprüche

1. Verfahren zur Druckfarbenentfernung aus Suspensionen, die Tintenstrahldruckfarben enthalten, **dadurch gekennzeichnet, dass**
- eine Suspension bereitgestellt wird, die Tintenstrahldruckfarben auf Basis wässriger Farbstoffe enthält, und
- die Druckfarben durch Laccasebehandlung entfärbt werden.

2. Verfahren nach Anspruch 1, **dadurch gekennzeichnet, dass** als Suspension eine Pulpe verwendet wird, die hergestellt wird, indem
- ein Papierrohstoff bereitgestellt wird, der Papier enthält, das im Tintenstrahlverfahren ausgehend von wässrigen Farbstoffen bedruckt wurde,
- der Papierrohstoff einem Pulpengewinnungsverfahren unterzogen wird, um Pulpe zu erhalten, die Tintenstrahldruckfarben aus dem Papier enthält, das im Tintenstrahlverfahren bedruckt wurde, und welche die Suspension bildet,
und wobei die Tintenstrahldruckfarbe der Pulpe durch Laccasebehandlung entfärbt wird.

3. Verfahren nach Anspruch 2, **dadurch gekennzeichnet, dass** die Laccasebehandlung vor jedweden möglichen Behandlungen zur Tintenstrahldruckfarbenentfernung, die mit anderen Enzyme erfolgen, sowie in Abwesenheit anderer tintenstrahldruckfarbenentfernender Enzyme durchgeführt wird.

4. Verfahren nach Anspruch 2 oder 3, **dadurch gekennzeichnet, dass** die Laccasebehandlung zum gleichen Zeitpunkt wie das Entfernen anderer Druckfarbenpartikel mit nichtenzymatischen Chemikalien, wie etwa NaOH, H₂O₂, Natriumsilicat oder Natriumoleat oder mit einer beliebigen Kombination daraus, durchgeführt wird.

5. Verfahren nach einem beliebigen der Ansprüche 2 bis 4, **dadurch gekennzeichnet, dass** die Menge an Papier, das im Tintenstrahlverfahren bedruckt wurde, in der Pulpe mindestens 0,5 Gewichts-%, vorzugsweise mindestens 1 Gewichts-%, insbesondere mindestens 5 Gewichts-% beträgt.

6. Verfahren nach einem beliebigen der Ansprüche 2 bis 5, **dadurch gekennzeichnet, dass** der Papierrohstoff ungestrichenes Papier, das im Tintenstrahlverfahren ausgehend von wässrigen Farbstoffen bedruckt wurde, enthält.

7. Verfahren nach einem beliebigen der Ansprüche 2 bis 6, **dadurch gekennzeichnet, dass** die Laccasebehandlung bei einer Pulpenkonsistenz von 3 bis 8 % durchgeführt wird.

8. Verfahren nach einem beliebigen der Ansprüche 2 bis 7, **dadurch gekennzeichnet, dass** die Menge an Laccase 0,1 bis 10 U pro Gramm an Papierpulpentrockenmasse beträgt.

9. Verfahren nach Anspruch 1, **dadurch gekennzeichnet, dass**
- ein Rohstoff bereitgestellt wird, der Papier enthält, welches mit Tintenstrahldruckfarben auf Basis wässriger Farbstoffe bedruckt ist,
- das Papier einem Pulpengewinnungsverfahren unterzogen wird, um Pulpe zu erhalten, die Tintenstrahldruckfarbe aus dem Papier enthält, das im Tintenstrahlverfahren bedruckt wurde,
- die Pulpe einem Druckfarbenentfernungsverfahren unterzogen wird,
- ausgangsseitig des Druckfarbenentfernungsverfahrens eine Wasserphase erhalten wird, wobei die Wasserphase mindestens eine Teilmenge der Tintenstrahldruckfarben enthält und die Suspension bildet, und
- die Tintenstrahldruckfarben in der Wasserphase durch Laccasebehandlung entfärbt werden.

10. Verfahren nach einem beliebigen der vorhergehenden Ansprüche, **dadurch gekennzeichnet, dass** die Laccasebehandlung in Gegenwart eines Vermittlers, wie etwa Acetosyringon, ABTS oder Violursäure, durchgeführt wird.

11. Verfahren nach einem beliebigen der vorhergehenden Ansprüche, **dadurch gekennzeichnet, dass** die Druckfarbe Azofarbstoffe enthält, insbesondere Azofarbstoffe mit elektronenspendenden Gruppen in ortho-Position.

12. Verfahren nach einem beliebigen der vorhergehenden Ansprüche, **dadurch gekennzeichnet, dass** die Laccase aus Myceliophtora thermophila oder Trametes versicolor gewonnen wird.

13. Verfahren nach einem beliebigen der vorhergehenden Ansprüche, **dadurch gekennzeichnet, dass** die Laccasebehandlung bei einer Temperatur von 20 bis 60 °C durchgeführt wird.

14. Verfahren nach einem beliebigen der vorhergehenden Ansprüche, **dadurch gekennzeichnet, dass** die Laccasebehandlung mindestens 30 Minuten lang, insbesondere mindestens 50 Minuten lang, vorzugsweise unter mäßigem Mischen durchgeführt wird.

15. Verfahren nach einem beliebigen der vorhergehenden Ansprüche, **dadurch gekennzeichnet, dass** der Entfärbung eine Flotationsphase nachgeschaltet oder vorgeschaltet ist.

16. Verwendung von Laccase, um Tintenstrahldruckfarben, die auf wässrigen Farbstoffen basieren, aus einer Suspension eines Druckfarbenentfernungsverfahrens zu entfärben, welche Tintenstrahldruckfarben enthält.

17. Verwendung nach Anspruch 16, **dadurch gekennzeichnet, dass** es sich bei der Suspension um Pulpe handelt, die erhalten wird, indem Papier, das mit Tintenstrahldruckfarbe bedruckt ist, einem Pulpengewinnungsverfahren unterzogen wird.

18. Verwendung nach Anspruch 17, **dadurch gekennzeichnet, dass** die Entfärbung mit Laccase durchgeführt wird, ohne die Druckfarben vor der Entfärbung enzymatisch zu entfernen.

19. Verwendung nach Anspruch 16, **dadurch gekennzeichnet, dass** die Suspension Prozesswasser eines Druckfarbenentfernungsverfahrens, wie Umwälzwasser oder Abwasser, umfasst.

20. Verwendung nach einem beliebigen der Ansprüche 16 bis 19, **dadurch gekennzeichnet, dass** die Entfärbung mit Laccase in Abwesenheit anderer Enzyme durchgeführt wird.

## Revendications

1. Procédé de désencrage de suspensions contenant de l'encre pour jet d'encre, **caractérisé par** le fait de :
- procurer une suspension contenant de l'encre pour jet d'encre à base d'un colorant aqueux ; et
- décolorer ladite encre via un traitement faisant appel à de la laccase.

2. Procédé selon la revendication 1, **caractérisé par** l'utilisation, à titre de ladite suspension, d'une pâte de papier que l'on obtient par le fait de :
- procurer une matière brute à base de papier contenant du papier imprimé avec une encre pour jet d'encre à base d'un colorant aqueux ;
- transformer en pâte à papier la matière brute à base de papier pour obtenir une pâte de papier contenant de l'encre pour jet d'encre à partir du papier imprimé par jet d'encre et former ladite suspension ;
et dans lequel l'encre pour jet d'encre de la pâte à papier est décolorée via un traitement faisant appel à de la laccase.

3. Procédé selon la revendication 2, **caractérisé en ce que** le traitement faisant appel à de la laccase est mis en oeuvre avant l'un quelconque des traitements possibles de détachement d'une encre pour jet d'encre avec d'autres enzymes et en l'absence d'autres enzymes de détachement d'une encre pour jet d'encre.

4. Procédé selon la revendication 2 ou 3, **caractérisé par** la mise en oeuvre dudit traitement faisant appel à de la laccase de manière simultanée au détachement d'autres particules d'encre avec des produits chimiques non enzymatiques tels que le NaOH, le H₂O₂, le silicate de sodium ou l'oléate de sodium ou l'une quelconque de leurs combinaisons.

5. Procédé selon l'une quelconque des revendications 2 à 4, **caractérisé en ce que** la quantité de papier imprimé par jet d'encre dans la pâte de papier s'élève à au moins 0,5 % en poids, de préférence à au moins 1 % en poids, en particulier à au moins 5 % en poids.

6. Procédé selon l'une quelconque des revendications 2 à 5, **caractérisé en ce que** ladite matière brute à base de papier comprend du papier non couché, imprimé avec une encre pour jet d'encre à base d'un colorant aqueux.

7. Procédé selon l'une quelconque des revendications 2 à 6, **caractérisé en ce que** le traitement faisant appel à de la laccase est mis en oeuvre à une consistance de la pâte de papier de 3 à 8 %.

8. Procédé selon l'une quelconque des revendications 2 à 7, **caractérisé en ce que** la quantité de laccase s'élève de 0,1 à 10 U par gramme de pâte de papier à l'état sec.

9. Procédé selon la revendication 1, **caractérisé par** le fait de :
- procurer une matière brute contenant du papier imprimé avec une encre pour jet d'encre à base d'un colorant aqueux ;
- transformer le papier en pâte pour obtenir une pâte de papier contenant de l'encre pour jet d'encre à partir du papier imprimé par jet d'encre ;
- soumettre la pâte de papier à un procédé de désencrage ;
- obtenir une phase aqueuse de traitement à partir du procédé de désencrage, la phase aqueuse contenant au moins une portion de ladite encre pour jet d'encre, et former ladite suspension ; et
- décolorer l'encre pour jet d'encre dans ladite phase aqueuse via un traitement faisant appel à de la laccase.

10. Procédé selon l'une quelconque des revendications précédentes, **caractérisé par** la mise en oeuvre du traitement faisant appel à de la laccase en présence d'un médiateur tel que l'acétosyringone, l'ABTS ou l'acide violurique.

11. Procédé selon l'une quelconque des revendications précédentes, **caractérisé en ce que** l'encre contient des colorants azoïques, en particulier des colorants azoïques comprenant des groupes cédant des électrons en position *ortho.*

12. Procédé selon l'une quelconque des revendications précédentes, **caractérisé en ce que** la laccase dérive de *Myceliophtora thermophila* ou de *Trametes versicolor.*

13. Procédé selon l'une quelconque des revendications précédentes, **caractérisé en ce que** le traitement faisant appel à de la laccase est mis en oeuvre à une température de 20 à 60 °C.

14. Procédé selon l'une quelconque des revendications précédentes, **caractérisé en ce que** le traitement faisant appel à de la laccase est mis en oeuvre pendant au moins 30 minutes, en particulier pendant au moins 50 minutes, de préférence avec un mélange modéré.

15. Procédé selon l'une quelconque des revendications précédentes, **caractérisé en ce que** la décoloration est suivie ou précédée d'une phase de flottation.

16. Utilisation de laccase pour décolorer de l'encre pour jet d'encre à base d'un colorant aqueux d'une suspension contenant de l'encre pour jet d'encre d'un procédé de désencrage.

17. Utilisation selon la revendication 16, **caractérisée en ce que** la suspension est de la pâte de papier que l'on obtient par transformation en pâte du papier imprimé avec de l'encre pour jet d'encre.

18. Utilisation selon la revendication 17, **caractérisée en ce que** la décoloration avec la laccase est mise en oeuvre en l'absence d'un détachement de l'encre par voie enzymatique avant la décoloration.

19. Utilisation selon la revendication 16, **caractérisée en ce que** la suspension comprend de l'eau de traitement, telle que de l'eau de circulation ou un effluent, d'un procédé de désencrage.

20. Utilisation selon l'une quelconque des revendications 16 à 19, **caractérisée en ce que** la décoloration avec la laccase est mise en oeuvre en l'absence d'autres enzymes.
